(19) Europäisches Patentamt
European Patent Office
Office européen des brevets

(11) **EP 2 817 385 B1**

(12) **EUROPEAN PATENT SPECIFICATION**

(45) Date of publication and mention
of the grant of the patent:
**04.01.2017 Bulletin 2017/01**

(21) Application number: **13706368.1**

(22) Date of filing: **11.02.2013**

(51) Int Cl.:
*C09K 8/44* *(2006.01)*    *C09K 8/46* *(2006.01)*
*C09K 8/50* *(2006.01)*    *E21B 33/14* *(2006.01)*

(86) International application number:
**PCT/US2013/025555**

(87) International publication number:
**WO 2013/126233 (29.08.2013 Gazette 2013/35)**

(54) **IMPROVING SHEAR BOND STRENGTH OF SET CEMENT**

VERBESSERUNG DER SCHERBINDUNGSSTÄRKE VON ABGEBUNDENEM ZEMENT

AMÉLIORATIONS APPORTÉES À LA RÉSISTANCE D'ADHÉSION AU CISAILLEMENT D'UN CIMENT DURCI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.02.2012 US 201213404499**

(43) Date of publication of application:
**31.12.2014 Bulletin 2015/01**

(73) Proprietor: **Halliburton Energy Services, Inc.
Houston, TX 77072 (US)**

(72) Inventors:
• **KARCHER, Jeffery, Dwane
Duncan, OK 73533 (US)**

• **JONES, Paul, Joseph
Duncan, OK 73533 (US)**
• **ROWE, Misty, Dawn
Duncan, OK 73533 (US)**

(74) Representative: **Hoffmann Eitle
Patent- und Rechtsanwälte PartmbB
Arabellastraße 30
81925 München (DE)**

(56) References cited:
**EP-A1- 0 898 050    EP-A1- 0 980 957
EP-A2- 0 229 425    DE-B1- 1 479 252
US-A1- 2004 188 090    US-B1- 6 321 841**

**Description**

**BACKGROUND**

The present invention relates to subterranean operations. More specifically, the present invention relates to methods of cementing well bores in subterranean formations.

The present invention provides methods of cementing well bores whereby the set cement sheath may exhibit improved shear strength. During the construction of a well, such as an oil and gas well, a hydraulic cement is typically placed into the annular space between the walls of the well bore penetrating a subterranean formation and the exterior surface of the well bore casing suspended therein. Such cement compositions have also been placed into the annular space between the walls of concentric pipes, such as a well bore casing and a liner suspended in the well bore. Subsequent to placement of the cement composition, further operations in the well bore, such as drilling, are suspended for a time sufficient to permit the cement to set to form a mass of hardened cement in the annulus. The mass of hardened cement is referred to as the sheath. The cementing procedure resulting in the initial construction of the sheath is often referred to as the primary cementing operation.

The function of a cement sheath may include providing physical support and positioning of the casing in the well bore, bonding of the casing to the walls of the well bore, preventing the movement of fluid (liquid or gas) between formations penetrated by the well bore, and preventing fluid from escaping the well at the surface of the formation. The set cement sheath should be able to endure a number of stresses during various downstream operations after the primary cementing operation.

In practice, a cement sheath may be compromised due to shear and compression stresses exerted on the set cement. Such stress conditions may be caused by high fluid pressures and/or temperatures inside pipe cemented in well bores during testing, perforating, fluid injection and/or fluid production, for example. The high internal pipe pressure and/or temperature results in expansion of the pipe, both radially and longitudinally, which places stresses on the cement sheath potentially causing it to crack or the bonds between the exterior surfaces of the casing and/or the well bore walls and the cement sheath to fail resulting in a loss of hydraulic seal.

The hydraulic seal may be particularly important in maintaining zonal isolation. If this seal becomes compromised, inter-zonal communication may lead to oil and gas flowing to lower pressure zones within the well instead of being produced. Loss of seal integrity may also lead to water production or annular pressure build up. Any of these occurrences may require expensive remedial services and/or may even result in the well being shut down in order to comply with regulatory procedures.

Factors that can affect shear bond strength in a set cement sheath include, for example, the surface roughness of the casing, the precision of centering of the well bore casing string, the porosity of the well bore wall, the presence of thief zones in the vicinity of the well bore being cemented, and the removal of mud cakes prior to the primary cementing operation. Numerous approaches for improving shear bond strength have focused on the cementing compositions themselves and various additives have been included for this purpose, such as calcined magnesium oxide (MgO), which is capable of expanding during cement setting. This reagent and other additives capable of expansion may be employed to compensate for drying shrinkage associated with cement setting. However, while expanding additives may be useful to counteract drying shrinkage, this benefit may be ameliorated by reduction in compressive strength of the set cement. Moreover, while such reagents may provide an increase of shear bond through mechanical forces pushing against the well bore wall and casing, they may lack the additional benefit of chemical bonding between the cement, the well bore wall, and/or the casing string. In some applications, the mechanical force improvements provided by cement compositions alone may be insufficient for the well bore conditions.

US2004/188090A1 discloses a method for providing an increased bond strength between cement and casing pipe by adding at least on expansive agent as MgO and a latex in quantities enough to increase the shear bond strength. The obtained shear bond strength values are ranging from 0.19-2.84 MPa.

EP0229425A2 discloses a method for cementing a wellbore whereby the casing pipe is stabilised by forming an epoxy-resin based coating of the formation wall within the wellbore. The introduction of a cement composition into the resin-coated formation portion is not disclosed.

DE1479252B1 discloses a method of cementing a pipe in a wellbore having sufficient resistance against mechanical forces and an improved bond strength between pipe string and cement sheath, whereby the pipe string is coated with tacky resin comprising a particulate material. After inserting the pipe string into the wellbore, the pipe is cemented by introducing a hydraulic cement.

US6321841 B1 discloses sealing a pipe string in a wellbore in a disposal zone, by cementing a pipe string by introducing a hydraulic cement into an annulus between string and wellbore walls, displaying the hydraulic cement in and through the annulus with an epoxy sealing composition.

US6321841B1 is silent on the problem of shear bond strength of the cementing system, nor does it disclose coating of the walls of the formation prior to cementing.

EP0898050A1 discloses a composition and a method for sealing pipe strings in wellbores, providing high bond strength to the sealing system and proposes the use of a composition comprising epoxide-containing liquid, an organosilane, a hardening agent and cementing the pipe string with said composition. EP0898050A1 does not disclose to coat the walls of the formation prior to cementing with the epoxy sealing composition.

EP0980957A1 discloses a composition for sealing a pipe in a wellbore, having a high bond strength. The composition comprises hydraulic cement, aqueous rubber latex, fillers, an organosilane and an epoxide material. The method comprises placing the sealing composition in the annulus between pipe string and walls of the wellbore and allowing the composition to harden. EP0980957A1does not disclose to coat the walls of the formation prior to cementing with the sealing composition.

## SUMMARY OF THE INVENTION

The present invention relates to subterranean operations. More specifically, the present invention relates to methods of cementing well bores.

The present invention provides a method comprising the steps of coating at least a portion of the walls of a formation well bore with a resin to form a resin-coated formation portion, introducing a cement composition into the resin-coated formation portion, and allowing the cement composition to set to provide a set cement sheath neighboring the resin-coated formation portion, wherein a shear bond strength of the set cement sheath in the presence of the resin coating is greater than a shear bond strength of the cement composition or a shear bond strength of the resin, each individually.

In some embodiments, the present invention provides a method comprising, pumping a first resin through a casing string and into at least a portion of a first annulus between the outer wall of the casing string and a wall of a formation well bore at a first depth, displacing substantially all of the first resin in the portion of the first annulus to provide a resin-coated annular well bore wall and resin-coated outer wall of the casing string, pumping a first cement composition through the casing string and into the first annulus between the resin-coated annular well bore wall and the resin-coated outer wall of the casing string, and allowing the cement composition to set therein.

In some embodiments, the present invention provides a set cement sheath with a resin layer disposed between the formation and the cement sheath and/or a resin layer disposed between the casing string and the cement sheath, the resin layer providing improved shear strength compared to the cement alone or resin alone.

The features and advantages of the present invention will be readily apparent to those skilled in the art upon a reading of the description of the preferred embodiments that follows.

## BRIEF DESCRIPTION OF THE DRAWINGS

The following figure is included to illustrate certain aspects of the present invention, and should not be viewed as an exclusive embodiment. The subject matter disclosed is capable of considerable modification, alteration, and equivalents in form and function, as will occur to those skilled in the art and having the benefit of this disclosure.

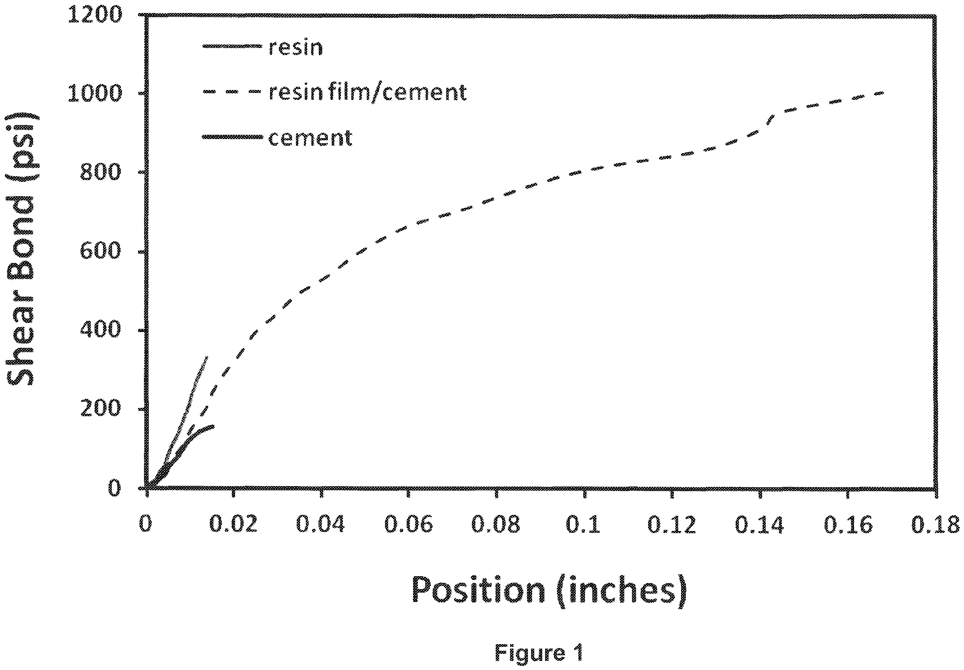

Figure 1 shows a plot of shear bond (psi/MPa) versus position (in/cm) for a) a resin alone, b) a cement alone, and c) a resin coating layer plus cement, as noted, in accordance with embodiments disclosed herein.

## DETAILED DESCRIPTION

The present invention relates to subterranean operations. More specifically, the present invention relates to methods of cementing well bores.

In order for a cement composition to properly provide zonal isolation, the set cement sheath should exhibit properties sufficient for the well bore conditions. These properties include, but are not limited to, compressive strength, tensile strength, pump time, rheology, fluid loss, Young's Modulus, and shear bond. The present invention provides methods of cementing well bores whereby the set cement sheath may exhibit improved shear bond strength. For example, while typical shear bond strength may be roughly about 10% of the compressive strength of the cement, methods of the present invention may provide substantially higher shear bond values up to values about equal to the compressive strength of the cement. The increase in shear bond strength may be the result of a synergistic effect provided by coating the well bore wall and/or the outer face of the casing string with a resin just prior to introducing a cement composition to form the set cement sheath in primary cementing operations. Without being bound by theory, such synergistic effects may be provided by chemical bonding motifs as well as mechanical bonding between the cement and the resin with each other and between the resin and the well bore wall and/or the casing string.

Advantageously, improvements in shear bond strength may be obtained through methods of the invention without altering the cement composition itself, allowing for the use of any standard or designed cement slurries. That is, no additional additives to the cement composition are needed to realize the improved shear bond values. Nonetheless, methods of the invention are compatible with the use of known additives that are designed to improve shear bond, such as calcined MgO, elastomers, or Al powder, for example. Likewise, resins employed in methods of the invention need not deviate from standard resin compositions that may be used in well bore plugging operations, for examples. Thus, methods of the invention are fully compatible with existing cements and resins, providing ready access with no special handling or formulating. The shear bond improvements are realized by resin coating just prior to introducing the cement composition. No resin setting is required, although partial curing may be optionally employed.

Methods of the present invention provide set cement sheaths with improved shear bond strength that may be beneficial in controlling gas migration and may exhibit fewer micro annuli being formed due to improved bonding to the casing. The resultant set cement sheaths provided by methods of the invention may provide better zonal isolation via a more robust hydraulic seal. Again, without being bound by theory, methods of the invention that employ a thin resin film in the well bore prior to introducing the cement, may exhibit improved fluid loss control in porous formations and in thief zones. This may result in less drying shrinkage and/or may avert the formation of potentially damaging cement bridges.

Finally, methods of the invention may be carried out on a rapid timescale whereby the cement composition may be introduced via the casing immediately after forming the thin resin film in the well bore. Thus, there is no need to allow for resin setting time. Given the guidance provided herein, other advantages will be apparent to the skilled artisan having the benefit of this disclosure.

The present invention provides methods comprising the steps of coating at least a portion of the walls of formation well bores with resins, introducing cement compositions into the coated formation well bores, and allowing the cement compositions to set to provide set cement sheaths, wherein the shear bond strengths of the set cement sheaths are greater than the shear bond strengths of the cement compositions or the shear bond strengths of the resins, each individually.

As used herein, the term "coating" refers to any process that may be used to provide a thin film of resin on any portion of the well bore wall surface, the outer surface of the casing string and/or any liners, or combinations thereof. Although fully coating the entirety of all surfaces to be cemented is ideal, the invention should not be so limited. Thus, in some embodiments, coating may comprise providing thin film coverage of the resin at particular portions of the well bore walls, casing string, liners, or combinations thereof. A coated surface may be one which after having been exposed to an excess of resin, the majority of excess resin is removed from any annular void volumes leaving behind enough resin to thinly coat the desired surfaces. In other embodiments, the desired surfaces are thinly coated by way of swabbing/painting with a tool, spraying the surface with neat or thinned resin, or otherwise applying the resin to the targeted surfaces. In some embodiments, thinly coating the surface may entail providing a resin film less than about 10 millimeters (mm) thickness, in other embodiments less than about 1 mm thickness, and yet in other embodiments less than about 0.1 mm, including any values in between and fractions thereof. In some embodiments, the exact thickness of a film may be a function of the viscosity of the resin under the well bore conditions. Those skilled in the art will recognize that the exact thickness of the resin coating is flexible and that coatings greater than 10 mm or less than 0.1 mm may also be operable.

In some embodiments, the resin component employed in methods of the invention may comprise a hardenable resin, an optional solvent, and an optional aqueous diluent or carrier fluid. As used herein, the term "resin" refers to any of a number of physically polymerizable synthetics or chemically modified natural resins including thermoplastic materials and thermosetting materials. Examples of resins that may be used in methods of the invention include, but are not limited to, epoxy-based resins, novolak resins, polyepoxide resins, phenol-aldehyde resins, urea-aldehyde resins, urethane resins, phenolic resins, furan resins, furan/furfuryl alcohol resins, phenolic/latex resins, phenol formaldehyde resins, bisphenol A diglycidyl ether resins, butoxymethyl butyl glycidyl ether resins, bisphenol A-epichlorohydrin resins, bisphenol F resins, glycidyl ether resins, polyester resins and hybrids and copolymers thereof, polyurethane resins and hybrids and copolymers thereof, acrylate resins, and mixtures thereof. Some suitable resins, such as epoxy resins, may be cured with an internal catalyst or activator so that when pumped down hole, they may be cured using only time and temperature. Other suitable resins, such as furan resins generally require a time-delayed catalyst or an external catalyst to help activate the polymerization of the resins if the cure temperature is low (i.e., less than about 250 °F.), but will cure under the effect of time and temperature if the formation temperature is above about 250 °F., (32 °F = 0°C) preferably above about 300 °F.

It is within the ability of one skilled in the art, with the benefit of this disclosure, to select a suitable resin for use in embodiments of the present invention and to determine whether a catalyst is required to trigger curing. One resin that may be used in particular embodiments of the present invention is the consolidation agent commercially available from Halliburton Energy Services, Inc., of Duncan, Okla., under the trade name EXPEDITE™. Consistent with embodiments disclosed herein, the curing of the resin need not occur prior to introduction of the cement composition. In some embodiments, the resin may be purposely not cured prior to introduction of the cement composition. In still further embodiments, a partial cure of the resin may be performed prior to introduction of the cement composition.

As used herein, the term "cement composition" refers to any hydraulic or non-hydraulic cement that is suitable for the construction of a cement sheath in primary cementing operations. In some embodiments, methods of the invention may include cement compositions comprising a hydraulic cement. In some embodiments, methods of the invention may include cement compositions comprising a non-hydraulic cement.

Suitable examples include hydraulic cements that comprise calcium, aluminum, silicon, oxygen and/or sulfur, which set and harden by reaction with water. Such hydraulic cements, include, but are not limited to, Portland cements, pozzolana cements, gypsum cements, high-alumina-content cements, slag cements, silica cements and combinations thereof. In certain embodiments, the hydraulic cement may comprise a Portland cement. The Portland cements that may be suited for use in embodiments of the present invention are classified as Class A, B, C, D, E, F, G and H cements according to American Petroleum Institute, Recommended Practice for Testing Well Cements, API Specification 10B-2 (ISO 10426-2), First edition, July 2005. In addition, in some embodiments, cements suitable for use in the present invention may include cements classified as ASTM Type I, II, III, IV, or V.

In some embodiments, non-hydraulic cements may comprise gypsum plaster, lime and blast furnace slag. In some embodiments, non-hydraulic cements may comprise acid base cements. The acid-base cement may be any acid-base cement known in the art, including acid-base cements used in other industries, such as acid-base cements employed in dental applications such as calcium phosphate acid-base cements. As used herein, "acid-base cement" refers to any cement that comprises an acid source and a base source capable of reacting to form a set cement. In some embodiments, the acid-base cement comprises any combination of a Lewis acid (electron pair acceptor) with a Lewis base (electron pair donor). In some embodiments, the acid-base cement is a non-hydraulic cement. Non-hydraulic cements may be created, for example, using materials such as non-hydraulic lime and gypsum plasters, and oxychloride, which has liquid properties.

A broad variety of acid sources and base sources may be suitable for use in the self-degrading cement compositions of the present invention. Examples of suitable acid sources include, inter alia, magnesium chloride ($MgCl_2$), potassium phosphate monobasic ($KH_2PO_4$), phosphoric acid ($H_3PO_4$), magnesium sulfate ($MgSO_4$), and ammonium phosphate monobasic ($NH_2PO_4$). Examples of suitable base sources include, inter alia, magnesium oxide (MgO), and ammonia ($NH_3$). An example of a suitable source of magnesium oxide is commercially available from Martin Marietta under the trade name "MagChem 10." An example of a suitable source of potassium phosphate monobasic is commercially available from Fisher Scientific.

Generally, an acid source and base source may be chosen that may react so as to form an acid-base cement. For example, magnesium oxide may be chosen as a base source, and potassium phosphate monobasic may be chosen as an acid source, so that in the presence of water they may react to produce an acid-base cement having the chemical formula $MgKPO_4$-$OH_2O$. As another example, magnesium oxide may be chosen as a base source, and magnesium chloride may be chosen as an acid source, so that in the presence of water they may react to produce an acid-base cement having three oxychloride phases; one oxychloride phase may have the chemical formula $5\ Mg(OH_2)MgCl_2$-$8H_2O$, which may be referred to as "5-form." As another example, magnesium oxide may be chosen as a base source, and phosphoric acid may be chosen as an acid source, so that in the presence of water they may react to produce an acid-base cement having the chemical formula $MgHPO_4$-$SH_2O$. As still another example, magnesium oxide may be chosen as a base source, and magnesium sulfate may be chosen as an acid source, so that in the presence of water they may react to produce an acid-base cement having four possible oxysulfate phases; one oxysulfate phase may have the chemical formula $3\ Mg(OH)_2MgSO_4$-$8H_2O$, which may be referred to as "3-form." As still another example, magnesium oxide may be chosen as a base source, and ammonium phosphate monobasic may be chosen as an acid source, so that in the presence of water they may react to produce an acid-base cement having the chemical formula $Mg(NH)_4PO_4$-$OH_2O$. A broad variety of acid sources and base sources may be used, and a broad variety of acid-base cements may be produced, in accordance with the present invention, including, but not limited to, those acid sources, base sources, and acid-base cements that are disclosed in "Acid-Base Cements: Their Biomedical and Industrial Applications," by Alan D. Wilson and John W. Nicholson (Cambridge Univ. Press, 1993).

Generally, the acid source and base source may be present in a stoichiometric amount. For example, in certain embodiments of the present invention wherein magnesium oxide is used as a base source and potassium phosphate monobasic is used as an acid source, their relative concentrations may be illustrated by EQUATION 1 below.

$$\text{EQUATION 1: } 0.15 \text{ grams MgO} + 0.52 \text{ grams } KH_2PO_4 + 0.33 \text{ grams } H_2O \sim^* 1$$
$$\text{gram } MgKPO_4\text{-}OH_2O.$$

EQUATION 1 is merely exemplary, and may be modified as one of ordinary skill in the art will recognize, with the benefit of this disclosure. For example, additional quantities of magnesium oxide may be included, in amounts in the range of from about 1% excess by weight to about 25% excess by weight, including any value in between or fractions thereof.

In some embodiments, methods of the invention provide an acid-base cement that includes at least one acid source selected from the group consisting of magnesium chloride ($MgCl_2$), zinc chloride ($ZnCl_2$), potassium phosphate

monobasic ($KH_2PO_4$), phosphoric acid ($H_3PO_4$), magnesium sulfate ($MgSO_4$), ammonium phosphate monobasic ($NH_4H_2PO_4$), and any combination thereof. In some embodiments, methods of the present invention provide an acid-base cement that includes at least one base source selected from the group consisting of magnesium oxide (MgO), zinc oxide (ZnO), ammonia ($NH_3$), and any combination thereof. For example, in some embodiments, the acid-base cement comprises a Sorel cement comprising magnesium, zinc, or mixtures thereof. In some embodiments, the Sorel cement is based on magnesium. In some embodiments, the Sorel cement has a formula $Mg_4Cl_2(OH)_6(H_2O)_8$. In some embodiments, the Sorel cement is a zinc variant employing zinc chloride and zinc oxide.

In some embodiments, cement compositions may be foamed or non-foamed. The cement compositions of the present invention further may comprise a conventional lost circulation material. The conventional lost circulation material may be any material that may minimize the loss of fluid circulation into the fractures and/or permeable zones of the formation. Examples of suitable conventional lost circulation materials include, but are not limited to, asphaltenes, ground coal, cellulosic materials, plastic materials, and the like. In certain exemplary embodiments, the conventional lost circulation materials may be provided in particulate form. One of ordinary skill in the art with the benefit of this disclosure will recognize the appropriate amount of the conventional lost circulation material for a chosen application.

Optionally, additional additives may be added to the cement compositions of the present invention as deemed appropriate by one skilled in the art, with the benefit of this disclosure. Examples of such additives include, inter alia, fly ash, silica, fluid loss control additives, surfactants, dispersants, accelerators, retarders, salts, mica, fibers, formation-conditioning agents, bentonite, cement kiln dust (CKD), expanding additives, microspheres, weighting materials, defoamers, and the like. For example, the cement compositions of the present invention may be foamed cement compositions comprising one or more foaming surfactants that may generate foam when contacted with a gas, e.g., nitrogen. An example of a suitable fly ash is an ASTM class F fly ash that is commercially available from Halliburton Energy Services of Dallas, Tex. under the trade designation "POZMIX® A." An example of a suitable expanding additive comprises deadburned magnesium oxide and is commercially available under the trade name "MICROBOND HT" from Halliburton Energy Services, Inc., at various locations.

As used herein, the term "shear bond strength," or just "shear bond" refers to the maximum load at first movement between the cement sheath and the casing and/or the well bore wall. An exemplary shear-bond-strength test may be performed as described in SPE 764 entitled "A Study of Cement Pipe Bonding" by L. G. Carter and G. W. Evans. Shear bond strength may be calculated by the formula:

$$SBS = \frac{F}{A}$$

where *SBS* is shear bond strength, F is the force required to break the bond between the pipe and the cement sheath, and A is the cement-casing contact area. In some embodiments, the shear bond strength achieved in methods of the invention may exceed about 10% of the compressive strength. In some embodiments, the shear bond strength may exceed about 20% of the compressive strength, about 30%, about 40%, about 50%, up to about 100% of the compressive strength, including any value in between and fractions thereof.

In some embodiments, methods of the invention may include the coating step, which further comprises coating at least a portion of the outer walls of the casing strings. The degree of coverage of the coating may be substantially the entire surface that is to be cemented, in some embodiments. In other embodiments, partial coating may be sufficient. In some embodiments, only the well bore wall is coated and not the casing. In other embodiments, both the well bore walls and the outer walls of the casing strings are coated. Where liners may be employed, coating may further comprise coating at least a portion of the inner and/or outer surface of the liners. In some such embodiments, the resin may be simply introduced into the annulus between the casing string and the well bore wall following a spacer fluid or cleaning fluid, or both. In some embodiments, coating is performed by introducing the resin directly into the annulus between the casing string and well bore wall. In some embodiments, methods of the invention may include the coating step, which is performed by a) introducing an excess of the resin between a casing string and the walls of the formation well bore, and b) removing the excess resin to provide coated formation well bore walls and a coated casing string. In some embodiments, excess resin may be introduced into the center of the casing string and pushed through the annulus between the casing and the well bore wall. In some such embodiments, an excess of resin may be added, followed by a spacer fluid to push the resin through the annulus.

In some embodiments, methods of the invention may include resins, which comprise a thermoplastic or thermoset material as described herein above. In some embodiments, methods of the invention may further comprise the step of minimally diluting the resin prior to the coating step to provide a target viscosity. In some such embodiments, methods of the invention may include resins having target viscosities in a range from about 1 cps to about 50,000 cps, (1 cps = 0.1 Pas) including about 1 cps, about 100 cps, about 1,000 cps, about 10,000 cps and about 50,000 cps, including any value in between and fractions thereof.

In some embodiments, the resin may be diluted in an amount in the range of about 5% to about 100% by volume (that is neat undiluted resin). In some embodiments, the resin may be about 75% to about 100% by volume. In some embodiments, the resin may be about 95% to about 100% by volume, including any values in between and fractions thereof. It is within the ability of one skilled in the art with the benefit of this disclosure to determine how much of the dilution the resin may need to achieve the desired results.

In some embodiments, a solvent may be added to the resin to reduce its viscosity for ease of handling, mixing and transferring. However, in particular embodiments, it may be desirable not to use such a solvent. It is within the ability of one skilled in the art with the benefit of this disclosure to determine if and how much solvent may be needed to achieve a viscosity suitable to the subterranean conditions of a particular application. Factors that may affect this decision include geographic location of the well, the surrounding weather conditions, and the desired long-term stability of the well bore servicing fluid. Moreover, the dilution of the resin may be a function of the ability to provide the thin coating used in the methods of the invention. An exemplary condition that may affect the ability to coat the well bore may be the direction of the portion well bore hole being cemented, such as a vertical section, horizontal section, or deviated section.

Generally, any solvent that is compatible with the resin and that achieves the desired viscosity effect may be suitable. Suitable solvents may include, but are not limited to, polyethylene glycol, butyl lactate, dipropylene glycol methyl ether, dipropylene glycol dimethyl ether, dimethyl formamide, diethyleneglycol methyl ether, ethyleneglycol butyl ether, diethyleneglycol butyl ether, propylene carbonate, d'limonene, fatty acid methyl esters, and combinations thereof. Selection of an appropriate solvent may be dependent on the resin composition chosen. In some embodiments, the solvent is chosen for ease of removal, that is a relatively volatile solvent may be employed. With the benefit of this disclosure, the selection of an appropriate solvent should be within the ability of one skilled in the art.

In some embodiments, the resin may also comprise an aqueous diluent, non-aqueous diluent, reactive diluent or carrier fluid to reduce the viscosity of the resin. The aqueous fluids used may comprise fresh water, saltwater (e.g., water containing one or more salts dissolved therein), brine (e.g., saturated saltwater), seawater, or combinations thereof, and may be from any source, provided that they do not contain components that might adversely affect the stability and/or performance of the cemented well bore. In some embodiments, the resin may also comprise dispersants and/or defoamers to further modulate the viscosity.

In some embodiments, methods of the invention may include allowing the cement composition to set without performing a separate resin hardening step. In some embodiments, methods of the invention may include partially curing at least a portion of the resin just prior to introducing the cement composition. Whether uncured or partially cured, the cement composition is subsequently introduced into the borehole.

Without being bound by theory, in either mode of uncured or partially cured resin, the cement composition may squeeze the resin against the well bore wall and into pores to aid in shear bond strength between the cement sheath and the well bore wall. In some embodiments, the setting of the cement sheath produces conditions that allow for curing or partial curing of the resin *(e.g.,* the exothermic nature of the set provides heat which cures the resin). In other embodiments, curing can be allowed to proceed after the cement sheath is set.

In some embodiments, methods of the invention may include operations wherein the formation well bore is substantially vertical. In some embodiments, methods of the invention may include operations wherein the formation well bore is substantially horizontal. In some embodiments, methods of the invention may include operations wherein the formation well bore is deviated. Methods of the invention may be carried out multiple times to install casing strings in pieces with intermediate drilling operations being performed between introduction of a new section of casing.

In some embodiments, methods of the invention may include set cement formation wherein the shear bond of the set cement sheath is in a range from about 5 psi to about 5,000 psi. (1 psi = 0.0068 MPa) In some embodiments, the shear bond of the set cement sheath is about 5 psi, about 10 psi, about 100 psi, about 200 psi, about 500 psi, about 1,000 psi, about 2,000 psi, about 3,000 psi, about 4,000 psi, and about 5,000 psi, including any value in between and fractions thereof. In some embodiments, the shear strength of the set cement using a resin coating synergistically provides a greater shear bond than the resin alone or the cement alone.

In some embodiments, methods of the invention comprise pumping a first resin through a casing string and into a first annulus between the outer wall of the casing string and a wall of a formation well bore at a first depth, removing substantially all of the first resin to provide a resin-coated formation well bore wall and coated outer wall of the casing string, pumping a first cement composition through the casing string and into the first annulus, and allowing the first cement composition to set. Performing these steps may entail the installation of the cement sheath, for example, proximal to the surface of the formation.

In operation, pumping the first resin through the casing string involves the use of an excess resin to coat at least a portion of the section being cemented. Removal of the excess resin may be accomplished, for example, by displacement or other means known in the art.

In some such embodiments, methods of the present invention may further comprise drilling beyond the first depth to a second depth, providing an extension to the casing string, pumping a second resin through the extension into a second annulus between the outer wall of the extension and the wall of a formation well bore at the second depth,

removing substantially all of the second resin to provide a resin-coated wall of the formation well bore at the second depth and a coated outer wall of the extension, pumping a second cement composition through the extension and into the second annulus, and allowing the cement composition to set providing a finished cemented well bore. These further drilling operations may be performed to set multi section casing strings throughout the formation to access target production zones.

In some embodiments, methods of the invention may employ resins in different portions of the formation that are the same or different. For example, a first resin of a particular viscosity may be employed at a first depth and, depending on the well bore conditions, a second resin at a second depth. Likewise, in some embodiments, methods of the invention may employ a first cement composition that is the same or different from the second cement composition depending on their location in the well bore. In some such embodiments, the first, second or both cement compositions may comprise a hydraulic cement. In other embodiments, the first, second, or both cement compositions may comprise a non-hydraulic cement. In some embodiments, one section may comprise a hydraulic cement, while a different section may employ a non-hydraulic cement. One skilled in the art, with the benefit of this disclosure will recognize the changing needs of the resin and cement compositions as different zones within the formation are penetrated. Moreover, the skilled artisan will appreciate that where cementing of a completed well bore may be performed in multiple steps involving multiple resin and cement applications, compatibility from one cemented zone to the next should be considered.

Methods of the invention employing multiple casing strings and cementing steps may be used to provide finished cemented well bores that are substantially vertical, substantially horizontal, or deviated.

Although methods of the invention are generally described in the context of primary cementing operations, one skilled in the art will recognize the ability to apply these concepts to other cementing applications, such as use in fluid loss cementing, cement squeeze operations, and the like.

To facilitate a better understanding of the present invention, the following examples of preferred embodiments are given. In no way should the following examples be read to limit, or to define, the scope of the invention.

EXAMPLES

This Example shows the synergistic effect on shear bond strength provided by resin coating with subsequent cementing.

An epoxy resin system containing 401.2 grams of the base resin diglycidyl ether of bisphenol A, 77.0 grams of the hardener diethyl toluene diamine, and 15.0 grams of amino and hydroxyl functionalized accelerators were mixed. Approximately 265 grams of hausmannite and 430 grams of sand were added to the formulation to achieve the desired density. This epoxy formulation was added to the annulus of concentric pipe apparatus described in SPE 764 entitled "A Study of Cement Pipe Bonding" by L. G. Carter and G. W. Evans.. The excess resin was removed from the mold resulting in a thin film on the surfaces of the mold. Upon completion, the cement slurry was added to the mold and cured at ambient conditions. The cement, resin film/cement, and resin samples were tested and the results shown below in Table 1 and in Figure 1. The resin-coated cement apparatus provided surprisingly high shear bond values for the set cement. Typically, the shear bond value is roughly 10% of the compressive strength. As can be seen, the resin-coated cement sample exhibits shear strength values substantially higher than resin or cement compositions alone.

Table 1

|  | Trial #1 | Trial #2 |
| --- | --- | --- |
| Cement | 130 | 150 |
| Resin Film/Cement | 740 | 1000 |
| Resin | 160 | 330 |

Therefore, the present invention is well adapted to attain the ends and advantages mentioned as well as those that are inherent therein. The particular embodiments disclosed above are illustrative only, as the present invention may be modified and practiced in different but equivalent manners apparent to those skilled in the art having the benefit of the teachings herein. Furthermore, no limitations are intended to the details of construction or design herein shown, other than as described in the claims below. The invention illustratively disclosed herein suitably may be practiced in the absence of any element that is not specifically disclosed herein and/or any optional element disclosed herein. Also, the terms in the claims have their plain, ordinary meaning unless otherwise explicitly and clearly defined by the patentee. Moreover, the indefinite particles "a" or "an," as used in the claims, are defined herein to mean one or more than one of the element that it introduces.

**Claims**

1.  A method comprising the steps of:

    coating at least a portion of the walls of a formation well bore with a resin to form a resin-coated formation portion;
    introducing a cement composition into the resin-coated formation portion;
    and
    allowing the cement composition to set to provide a set cement sheath neighboring the resin-coated formation portion,

    wherein a shear bond strength of the set cement sheath in the presence of the resin coating is greater than a shear bond strength of the cement composition or a shear bond strength of the resin, each individually.

2.  The method of claim 1, wherein the step of coating further comprises coating the outer walls of a casing string.

3.  The method of any of the preceding claims, wherein the coating step is performed by:

    introducing an excess of the resin between a casing string and the walls of the formation well bore; and
    removing the excess resin to provide coated formation well bore walls and a coated casing string.

4.  The method of any of the preceding claims, wherein the resin comprises a thermoplastic or thermoset material.

5.  The method of any of the preceding claims, further comprising the step of minimally diluting the resin prior to the coating step to provide a target viscosity.

6.  The method of claim 5, wherein the target viscosity is in a range from about 1 cps to about 50,000 cps.

7.  The method of any of the preceding claims, wherein allowing the cement composition to set is performed without performing a separate resin hardening step.

8.  The method of any of the preceding claims, wherein the cement composition comprises a hydraulic cement.

9.  The method of any of the preceding claims, wherein the cement composition comprises a non-hydraulic cement.

10. The method of any of the preceding claims, wherein the formation well bore is substantially vertical.

11. The method of any of claims 1-9, wherein the formation well bore is substantially horizontal.

12. The method of any of claims 1-9, wherein the formation well bore is deviated.

13. The method of any of the preceding claims, wherein the shear bond strength of the set cement sheath is in a range from about 5 psi to about 5,000 psi.

14. The method of claim 1, comprising:

    pumping a first resin through a casing string and into at least a portion of a first annulus between the outer wall of the casing string and a wall of the formation well bore at a first depth;
    displacing substantially all of the first resin in the portion of the first annulus to provide a first resin-coated annular well bore wall and a resin-coated outer wall of the casing string;
    pumping a first cement composition through the casing string and into the first annulus between the first resin-coated annular well bore wall and the resin-coated outer wall of the casing string; and
    allowing the first cement composition to set therein.

15. The method of claim 14, further comprising:

    drilling beyond the first depth to a second depth;
    providing an extension to the casing string;
    pumping a second resin through the extension into a second annulus between the outer wall of the extension and a wall of the formation well bore at the second depth;
removing substantially all of the second resin to provide a resin-coated wall of the formation well bore at the second depth and a resin-coated outer wall of the extension;
pumping a second cement composition through the extension and into the second annulus; and
allowing the second cement composition to set to provide a finished cemented well bore.

## Patentansprüche

1. Verfahren, umfassend die Schritte:

   Beschichten von zumindest einem Teil der Wände einer Bohrlochformationsbohrung mit einem Harz, um einen harzbeschichteten Formationsbereich zu bilden;
   Einführen einer Zementzusammensetzung in den Harzbeschichteten Formationsbereich; und
   Ermöglichen, dass die Zementzusammensetzung härtet, um eine gehärtete Zementauskleidung vorzusehen, die an den harzbeschichteten Formationsbereich angrenzt,
   worin die Scher-Bindungsfestigkeit der gehärteten Zementauskleidung in der Gegenwart der Harzbeschichtung größer ist als die Scher-Bindungsfestigkeit der Zementzusammensetzung oder der Scher-Bindungsfestigkeit des Harzes, jeweils individuell.

2. Verfahren gemäß Anspruch 1, worin der Schritt der Beschichtung ferner das Beschichten der äußeren Wände einer Förderfahrt umfasst.

3. Verfahren gemäß irgendeinem der vorhergehenden Ansprüche, worin der Beschichtungsschritt durchgeführt wird durch:

   Einführen eines Überschuss des Harzes zwischen einer Förderfahrt und den Wänden der Bohrlochformationsbohrung; und
   Entfernen des überschüssigen Harzes, um beschichtete Bohrlochformationsbohrungswände und eine beschichtete Förderfahrt zu bilden.

4. Verfahren gemäß Anspruch gemäß irgendeinem der vorhergehenden Ansprüche, worin das Harz ein thermoplastisches oder warmhärtendes Material umfasst.

5. Verfahren gemäß irgendeinem der vorhergehenden Ansprüche, ferner umfassend einen Schritt zum minimalen Verdünnen des Harzes vor dem Beschichtungsschritt, um eine Zielviskosität bereitzustellen.

6. Verfahren gemäß Anspruch 5, worin die Zielviskosität im Bereich von etwa 1 cps bis etwa 50.000 cps liegt.

7. Verfahren gemäß irgendeinem der vorhergehenden Ansprüche, worin das Ermöglichen, dass die Zementzusammensetzung härtet, durchgeführt wird, ohne einen separaten Harz-Härungsschritt durchzuführen.

8. Verfahren gemäß irgendeinem der vorhergehenden Ansprüche, worin die Zementzusammensetzung einen hydraulischen Zement umfasst.

9. Verfahren gemäß irgendeinem der vorhergehenden Ansprüche, worin die Zementzusammensetzung einen nichthydraulischen Zement umfasst.

10. Verfahren gemäß irgendeinem der vorhergehenden Ansprüche, worin die Bohrlochformationsbohrung im Wesentlichen vertikal ist.

11. Verfahren gemäß irgendeinem der Ansprüche 1 bis 9, worin die Bohrlochformationsbohrung im Wesentlichen horizontal ist.

12. Verfahren gemäß irgendeinem der Ansprüche 1 bis 9, worin die Bohrlochformationsbohrung abknickend ist.

13. Verfahren gemäß irgendeinem der vorhergehenden Ansprüche, worin die Scher-Bindungsfestigkeit der gehärteten Zementauskleidung im Bereich von etwa 5 Psi bis etwa 5.000 Psi liegt.

**14.** Verfahren gemäß Anspruch 1, umfassend:

Pumpen eines ersten Harzes durch die Förderfahrt und zumindest einen Teil eines ersten Rings zwischen der äußeren Wand der Förderfahrt und einer Wand der Bohrlochformationsbohrung an einer ersten Tiefe; Ersetzen von im Wesentlichen allem des ersten Harzes in dem Teil des ersten Rings, um eine erste harzbeschichtete ringförmige Bohrlochwand und eine harzbeschichtete äußere Wand der Förderfahrt zu bilden; Pumpen einer ersten Zementzusammensetzung durch die Förderfahrt in den ersten Ring zwischen der ersten harzbeschichteten ringförmigen Bohrlochwand und der harzbeschichteten äußeren Wand der Förderfahrt; und Ermöglichen, dass die Zementzusammensetzung hierin härtet.

**15.** Verfahren gemäß Anspruch 14, ferner umfassend:

Bohren über die erste Tiefe hinaus zu einer zweiten Tiefe; Bereitstellen einer Verlängerung der Förderfahrt; Pumpen eines zweiten Harzes durch die Verlängerung zu einem zweiten Ring zwischen der äußeren Wand der Verlängerung und einer Wand der Bohrlochformationsbohrung bei der zweiten Tiefe; Entfernen von im Wesentlichen allem des zweiten Harzes, um eine harzbeschichtete Wand der Bohrlochformationsbohrung bei der zweiten Tiefe und eine harzbeschichtete äußere Wand der Verlängerung zu bilden; Pumpen einer zweiten Zementzusammensetzung durch die Verlängerung und in den zweiten Ring; und Ermöglichen, dass die zweite Zementzusammensetzung härtet, um ein fertiggestelltes, zementiertes Bohrloch bereitzustellen.

**Revendications**

**1.** Procédé comprenant les étapes suivantes :

revêtement d'au moins une partie des parois d'un puits de forage de formation avec une résine pour former une partie de formation revêtue de résine ; introduction d'une composition de ciment dans la partie de formation revêtue de résine ; et permettre à la composition de ciment de durcir pour fournir une gaine de ciment durcie à proximité de la partie de formation revêtue de résine, dans lequel une résistance de liaison au cisaillement de la gaine de ciment durcie en présence du revêtement de résine est supérieure à une résistance de liaison au cisaillement de la composition de ciment ou à une résistance de liaison au cisaillement de la résine, chacune individuellement.

**2.** Procédé selon la revendication 1, dans lequel l'étape de revêtement comprend en outre le revêtement des parois extérieures d'une colonne de tubage.

**3.** Procédé selon l'une quelconque des revendications précédentes, dans lequel l'étape de revêtement est réalisée par :

introduction d'un excès de la résine entre une colonne de tubage et les parois du puits de forage de formation ; et élimination de la résine en excès pour fournir des parois de puits de forage de formation revêtues et une colonne de tubage revêtue.

**4.** Procédé selon l'une quelconque des revendications précédentes, dans lequel la résine comprend un matériau thermoplastique ou thermodurcissable.

**5.** Procédé selon l'une quelconque des revendications précédentes, comprenant en outre l'étape de dilution minimale de la résine avant l'étape de revêtement pour fournir une viscosité cible.

**6.** Procédé selon la revendication 5, dans lequel la viscosité cible est dans une plage d'environ 1 cps à environ 50 000 cps.

**7.** Procédé selon l'une quelconque des revendications précédentes, dans lequel le fait de permettre à la composition de ciment de durcir est réalisé sans réaliser une étape de durcissement de la résine séparée.

**8.** Procédé selon l'une quelconque des revendications précédentes, dans lequel la composition de ciment comprend un ciment hydraulique.

9. Procédé selon l'une quelconque des revendications précédentes, dans lequel la composition de ciment comprend un ciment non hydraulique.

10. Procédé selon l'une quelconque des revendications précédentes, dans lequel le puits de forage de formation est sensiblement vertical.

11. Procédé selon l'une quelconque des revendications 1 à 9, dans lequel le puits de forage de formation est sensiblement horizontal.

12. Procédé selon l'une quelconque des revendications 1 à 9, dans lequel le puits de forage de formation est sensiblement dévié.

13. Procédé selon l'une quelconque des revendications précédentes, dans lequel la résistance de liaison au cisaillement de la gaine de ciment durcie est dans une plage d'environ 5 psi à environ 5 000 psi.

14. Procédé selon la revendication 1, comprenant :

le pompage d'une première résine à travers une colonne de tubage et dans au moins une partie d'un premier anneau entre la paroi extérieure de la colonne de tubage et une paroi du puits de forage de formation à une première profondeur;
le déplacement de sensiblement toute la première résine dans la partie du premier anneau pour fournir une première paroi de puits de forage annulaire revêtue de résine et une paroi extérieure revêtue de résine de la colonne de tu bage ;
le pompage d'une première composition de ciment à travers la colonne de tubage et dans le premier anneau entre la première paroi de puits de forage annulaire revêtue de résine et la paroi extérieure revêtue de résine de la colonne de tu bage ; et
permettre à la première composition de ciment de durcir dans celle-ci.

15. Procédé selon la revendication 14, comprenant en outre :

le forage au-delà de la première profondeur jusqu'à une seconde profondeur;
la fourniture d'une extension à la colonne de tubage ;
le pompage d'une seconde résine à travers l'extension jusque dans un second anneau entre la paroi extérieure de l'extension et une paroi du puits de forage de formation à la seconde profondeur;
l'élimination de sensiblement toute la seconde résine pour fournir une paroi revêtue de résine du puits de forage de formation à la seconde profondeur et une paroi extérieure revêtue de résine de l'extension ;
le pompage d'une seconde composition de ciment à travers l'extension et jusque dans le second anneau ; et
permettre à la seconde composition de ciment de durcir pour fournir un puits de forage cimenté fini.

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2004188090 A1
- EP 0229425 A2
- DE 1479252 B1
- US 6321841 B1
- EP 0898050 A1
- EP 0980957 A1

### Non-patent literature cited in the description

- American Petroleum Institute, Recommended Practice for Testing Well Cements. API Specification 10B-2. July 2005
- **ALAN D. WILSON ; JOHN W. NICHOLSON.** Acid-Base Cements: Their Biomedical and Industrial Applications. Cambridge Univ. Press, 1993